# DEMANDE DE BREVET EUROPEEN

(11) **EP 0 604 268 A1**
(43) Date de publication de la demande: **29.06.1994**
(21) Numéro de dépôt: 93403023.0
(22) Date de dépôt: 14.12.1993
(51) Int. Cl.: H04N 3/09, H04N 5/33

(54) **Dispositif de contrôle et d'adaptation de signature de plate-forme dans des environnements variés**

(30) Priorité: 21.12.1992 FR 9215387
(71) Demandeur: THOMSON-CSF, 75008 Paris (FR)
(72) Inventeur: Fontanella, Jean-Claude, F-92402 Courbevoie Cedex (FR); Berginc, Gérard, F-92402 Courbevoie Cedex (FR)
(74) Mandataire: Lincot, Georges

(57) **Abrégé**

Le dispositif de contrôle selon l'invention vise à diminuer à tout instant les écarts de signatures, notamment infrarouges, entre une plate-forme et son environnement.

Le dispositif selon l'invention comporte un radiomètre multispectral (SR) à balayage, comportant une tête tournante (4) portant un miroir de renvoi (6) pour projeter le flux provenant de l'espace balayé, lors de sa rotation réalisée par un moteur (5), sur des moyens de détection (2) associés à des moyens de traitement de signal (3). Ces moyens de traitement fournissent, dans chaque bande spectrale UV, visible et IR, des valeurs d'écarts de signature entre la plate-forme et son environnement, et déclenchent des moyens de commande de diminution de ces écarts.

Application aux plates-formes terrestres, maritimes et aériennes.

## Description

Le domaine de l'invention est la discrétion des plates-formes dans tous les domaines spectraux du rayonnement lumineux ultraviolet (UV), visible et/ou infrarouge (IR), et plus particulièrement le domaine couvrant les radiations visibles et infrarouges.

La présente invention a pour objet un dispositif de contrôle et d'adaptation de la signature d'une plate-forme donnée dans des environnements variés. Elle s'applique à toute structure terrestre, aérienne ou maritime.

Le souci de réduire la signature visible des cibles par le camouflage a donné naissance à de nombreux dispositifs (peintures, filets...). Le souci de réduire la signature infrarouge thermique, plus récent, a conduit à la mise au point de matériaux d'émissivité adaptée au masquage des points chauds. Il existe par exemple des oxydes et des sulfures de métaux de transition dont l'émissivité décroît fortement lorsque la température monte. Mais les propriétés de ces revêtements ou de ces caches sont figées et adaptées une fois pour toute à un environnement donné, celui de la mission prévue.

De manière classique, une signature, par exemple une signature infrarouge, d'une structure ou d'un fond fini, peut se définir comme l'ensemble des intensités du rayonnement émis et réfléchi par la structure ou le fond dans une bande spectrale donnée (par exemple dans les bandes 3-5 µm ou 8-12 µm de la transmission dans l'atmosphère), soit globalement soit en fonction d'une distribution spatiale. La détermination des signatures, lors de différentes phases d'expérimentation, est généralement obtenue par des mesures effectuées à l'aide de dispositifs d'imagerie calibrés (caméra visible ou thermique). Ces mesures permettent de choisir les moyens de réduction de signature adaptés à la plate-forme.

Les systèmes de détection optroniques étant de plus en plus performants, la survie des cibles dépend à l'heure actuelle de leur capacité à ne pas être détectées, en restant "confondues" avec leur environnement lorsque celui-ci varie. Dans ce contexte, les techniques de réduction de signature évoquées plus haut sont inefficaces car elles ne permettent pas d'obtenir, à chaque instant, une signature de cible bien adaptée à l'environnement de cette cible.

L'invention se propose précisément de résoudre ce problème, en réalisant le contrôle et l'adaptation des signatures d'une plate-forme et de son environnement dans des conditions opérationnelles variables.

Pour atteindre cet objectif, l'invention est basée sur l'obtention et l'exploitation d'une mesure directe de ce que capteraient des détecteurs adverses grâce à l'utilisation d'un radiomètre multispectral à balayage. Ce radiomètre multispectral est adapté de manière à pouvoir mesurer et comparer, par une exploration sur 360°, les rayonnements (ultraviolet, visible et infrarouge) émis par la cible et par son environnement respectivement dans les bandes spectrales UV, visible et IR. Des moyens de comparaison et de commande permettent de conserver une adaptation entre la signature de la cible et celle de son environnement, telles que "vues" par le radiomètre multispectral.

Plus précisément, l'objet de l'invention concerne un dispositif de contrôle et d'adaptation de signature d'une plate-forme dans un environnement variable, la plate-forme et son environnement émettant des rayonnements lumineux dans les bandes spectrales UV, visible et IR, caractérisé en ce qu'il comporte un radiomètre multispectral à balayage, équipé d'une tête tournante projetant les rayonnements provenant d'un espace balayé, sur des moyens de détection et de traitement, dans chacune desdites bandes, des niveaux des rayonnements émis respectivement par la plate-forme et par son environnement dans l'espace balayé, pour estimer des écarts de signatures de la plate-forme et de l'environnement, et des moyens de commande de diminution des écarts de signature estimés lorsque les moyens de comparaison émettent un signal d'alarme.

L'ajustement des écarts de signatures peut être obtenu par une modification du déroulement de la mission afin d'adapter la signature de l'environnement à celle de la cible. Dans ce cas, les moyens de commande sont constitués par un avertissement indiquant le type d'environnement plus favorable, en fonction des données fournies par les moyens de comparaison.

L'ajustement des signatures peut être réalisée également par la commande automatique ou manuelle de moyens destinés à agir sur I'émissivité de certaines zones "chaudes" (moteurs, extrémités de pénétration) de la plate-forme recouvertes de matériau à émissivité modulable.

Avantageusement des éléments de référence, par exemple des plaques thermostatées, sont répartis sur la plate-forme pour permettre un calibrage du spectro radiomètre en fonction de la température.

Dans ces conditions, le dispositif selon l'invention est simple, compact et suffisamment efficace pour permettre de juger avec précision de la vulnérabilité d'une plate-forme dans les conditions opérationnelles les plus variées.

D'autres caractéristiques et avantages apparaîtront à la lecture de la description qui suit, faite en référence aux figures annexées qui représentent, respectivement :
- la figure 1, un exemple schématisé de radiomètre multispectral à balayage utilisé par l'invention ;
- la figure 2, le schéma d'une plaque de référence thermostatée pour la calibration du radiomètre multispectral ;
- la figure 3, un exemple de circuit de traitement du dispositif selon l'invention ;
- la figure 4, un exemple de distribution spatiale de l'intensité du rayonnement capté par le détecteur infrarouge du radiomètre multispectral ;
- les figures 5a à 5c, des schémas d'implantation du radiomètre multispectral sur des plates-formes terrestre, aérienne et maritime.

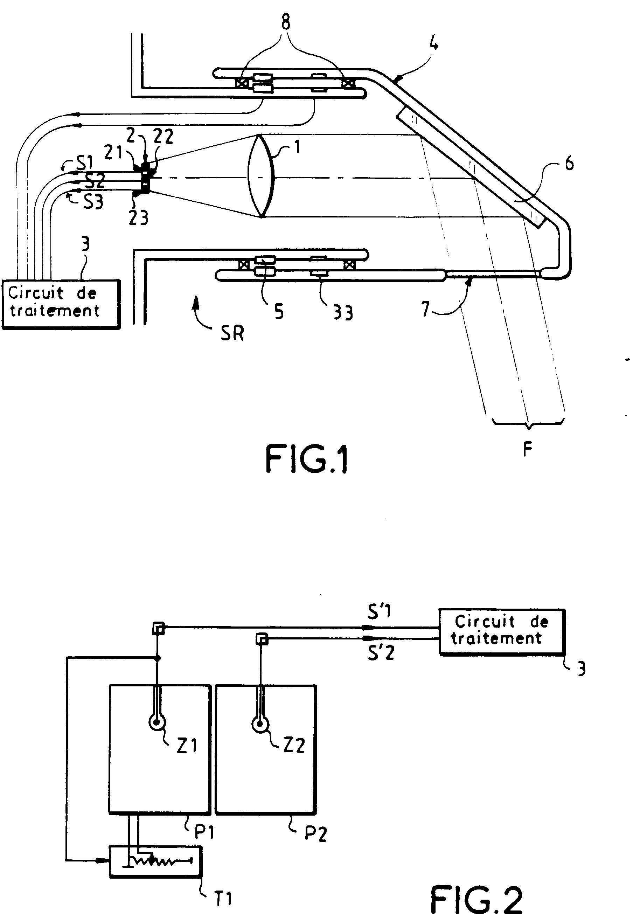

La figure 1 représente un exemple schématisé de radiomètre multispectral SR à balayage utilisé dans le cadre de l'invention. Il comporte classiquement un objectif frontal 1 et des moyens de détection 2 placés au voisinage de l'axe optique X'X de l'objectif, approximativement au foyer de cet objectif. Les moyens 2 fournissent au moins un signal à un circuit de traitement 3. Le signal délivré intègre l'énergie reçue par les moyens de détection dans le spectre de sensibilité de ces moyens.

Afin de réaliser un balayage spatial sur 360°, le radiomètre multispectral possède selon l'invention une tête avant tournante 4 entraînée sur roulements 8 par un moteur 5 sur 360° autour de l'axe optique X'X. Cette tête porte un miroir 6 qui renvoie le flux balayé F, défini par une ouverture 7 pratiquée dans la tête, sur les moyens de détection 2 par l'intermédiaire de l'objectif 1.

L'objectif est en matériau transparent, au moins dans le domaine des radiations visibles et infrarouges. Il est constitué par exemple en sulfure de zinc. Dans l'exemple de réalisation, les moyens 2 comprennent, pour permettre une détection sur un large spectre, un ensemble de trois détecteurs de rayonnements 21, 22 et 23 placés dans un plan proche du plan de focalisation afin de pouvoir être tous illuminés. Par exemple ces trois détecteurs sont respectivement :
- un détecteur pyroélectrique pour détecter le rayonnement infrarouge,
- des photodiodes au silicium associées à des filtres colorés (rouge, vert, bleu) pour détecter le rayonnement visible,
- des photodiodes au silicium à sensibilité augmentée dans l'UV pour détecter le rayonnement UV.

Afin de pouvoir calibrer la détection infrarouge, la zone balayée par le radiomètre multispectral au cours de sa rotation comprend une zone de référence située sur la surface de la plate-forme. Cette référence est destinée à fournir des valeurs de rayonnement correspondant à une température connue. La figure 2 présente une telle zone. Cette zone comprend :
- une première plaque homogène P1 d'émissivité préalablement déterminée, cette plaque peut être chauffée par une thermistance T1 à une température T + ΔT, T étant la température ambiante ;
- une seconde plaque homogène P2 de même type que P1, et laissée à la température ambiante T ;
- deux sondes de mesure de température, Z1 et Z2, par exemple de type thermistor, couplées à chaque plaque, respectivement P1 et P2.

L'utilisation de deux plaques d'écart de température connu, dans les conditions exposées ci-après, permet de calibrer la sensibilité du radiomètre multispectral en infrarouge. Pour une vitesse de rotation du miroir de l'ordre d'un tour par seconde et des caractéristiques optiques et géométriques classiques, un calcul montre que la sensibilité est de l'ordre de 0,02°K.

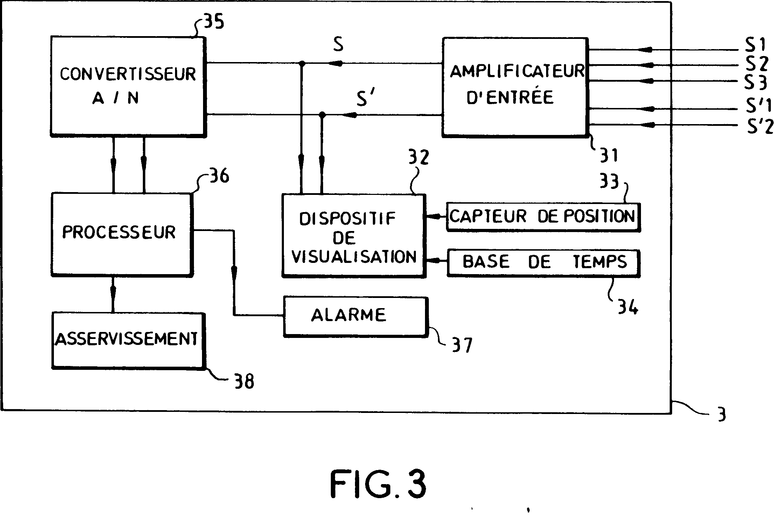

Chacun des trois détecteurs 21, 22, 23 fournit un signal S1, S2, S3, dont l'intensité est proportionnelle à l'éclairement reçu par le détecteur, dans chaque direction définie au cours du balayage, dans sa gamme spectrale de sensibilité. Le circuit de traitement 3 de ces signaux, dont un exemple schématisé de mise en oeuvre est représenté sur la figure 3, permet d'obtenir la répartition spatiale sur 360° des rayonnements IR, visible et UV émis par la partie du fond (ciel, terre ou mer) et de la surface de la plate-forme balayées au cours du balayage.

Dans le circuit 3, les signaux S1, S2 et S3, et avantageusement les signaux S'1 et S'2 provenant des sondes de température Z1 et Z2, et traduisant en grandeur électrique les températures T + ΔT et T, sont amplifiés dans un amplificateur d'entrée 31. Les signaux amplifiés sont désignés par S pour l'ensemble des signaux de détection spectrale, et par S' pour les signaux de détection de température.

Un traitement analogique permet de visualiser, sur un dispositif de visualisation 32 les amplitudes des signaux S, en fonction de l'angle de balayage du radiomètre multispectral. Pour ce faire, une information sur la direction balayée par le radiomètre multispectral en fonction du temps est élaborée par exemple à partir d'un signal de capteur de position 33 du miroir de balayage (disposé dans la tête de balayage 4, figure 1) couplé à une base de temps 34. Cette information est synchronisée avec la transmission des signaux S et S' dans le dispositif de visualisation 32 qui comporte à cette fin (ou qui est relié à) un synchroniseur. La donnée des signaux S' permet de calibrer en température, à tout instant, le signal de détection infrarouge S1 selon des procédés connus.

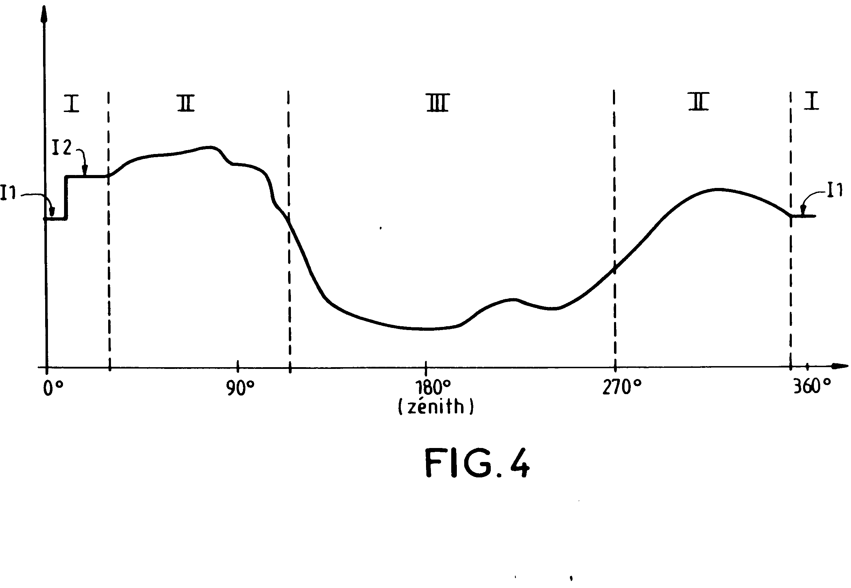

Le dispositif de visualisation 32 peut être un moniteur TV, un oscilloscope ou un enregistreur. Il fournit les courbes de variation des signaux de détection spectrale S1, S2 et S3 en fonction de l'angle de rotation du miroir entre 0 et 360°. Un exemple de courbe de variation spectrale de S1 est représenté sur la figure 4. La courbe C présentée passe par trois stades : un stade I de référence, présentant deux plateaux I1 et I2 correspondant à la zone de balayage des deux plaques de référence P1 et P2, un stade II de balayage de la zone II correspondant à la surface de la plate-forme analysée, et un stade de balayage de la zone III correspondant au fond analysé par le radiomètre multispectral (l'environnement latéral et le ciel dans l'exemple illustré, avec un zénith correspondant à l'angle de 180° ) dans lequel se déplace la plate-forme.

Un traitement numérique des données du signal est également mis en oeuvre, seul ou conjointement avec le traitement analogique décrit ci-dessus. Ce traitement exploite ces données afin de fournir, à l'aide de tests de discrétion, des ordres adaptés aptes à conserver à la plate-forme une discrétion suffisante, notamment vis-à-vis de la détection infrarouge.

En référence à la figure 3, les intensités des signaux S et S' sont converties en valeurs numériques Sn et S'n dans un convertisseur Analogique-Numérique 35. Les valeurs numériques Sn et S'n sont appliquées à un processeur 36 qui mémorise et analyse ces valeurs. Cette analyse consiste, à l'aide de moyens classiques de programmation et de mémorisation, à estimer les écarts de signature à partir du calcul des écarts entre les valeurs caractéristiques d'un même signal, obtenues suivant la zone balayée par le radiomètre multispectral. Par exemple, pour le signal de détection infrarouge, les écarts entre les valeurs moyennes SII et SIII du signal direction S correspondant aux zones de balayage II et III sont successivement calculés et mémorisés. Ces écarts sont ensuite comparés dans le processeur 36 à des valeurs minimales mémorisées pour constituer des tests de discrétion : Si un écart est supérieur à une valeur minimale prédéterminée, le test est positif et le calculateur déclenche soit une alarme 37 pour indiquer une marche à suivre, soit des moyens d'asservissement 38 bouclés sur l'obtention d'un test de discrétion négatif.

La marche à suivre indiquée par l'alarme elle-même donne des directives afin de diminuer l'écart estimé calculé, par exemple l'écart estimé des signatures infrarouges. Les directives se rapportent par exemple à la recherche d'une zone dans laquelle la signature du fond se rapproche de celle de la plate-forme. Une telle modification est donc obtenue par un changement adapté de la trajectoire de la mission

Le déclenchement de moyens d'asservissement 38 concerne par exemple la commande du taux de transmission spectrale d'une couche recouvrant les zones chaudes de la plate-forme, afin d'obtenir une émissivité variable en fonction de la température. En utilisant une première couche fortement réfléchissante, constituée par exemple d'acier poli ou d'aluminium, recouverte d'une seconde couche d'un matériau qui passe d'un état transparent à un état opaque lorsque la température croît, I'émissivité de l'ensemble passe d'une valeur proche de 1 à une valeur relativement proche de 0. En commandant la transmission spectrale de cette couche par un signal déduit de l'analyse d'écart de signature infrarouge précédente, la discrétion de ces zones chaudes critiques s'en trouve nettement améliorée. Par exemple, la couche de transmission variable est constituée par un matériau électro-optique dont la transparence est commandée par les potentiels d'électrodes réparties sur cette couche. Les potentiels sont asservis au signal d'écart de signatures infrarouges, cet asservissement liant la variation de l'opacité de la couche électro-optique à la variation de l'écart des signatures jusqu'à l'obtention d'un test de discrétion négatif.

Le radiomètre multispectral peut être implanté de différentes façons selon le type de plate-forme. La figure 5a illustre un exemple d'implantation à l'arrière d'un véhicule terrestre VT, le radiomètre multispectral SR étant disposé au-dessus des plaques de référence en position P.

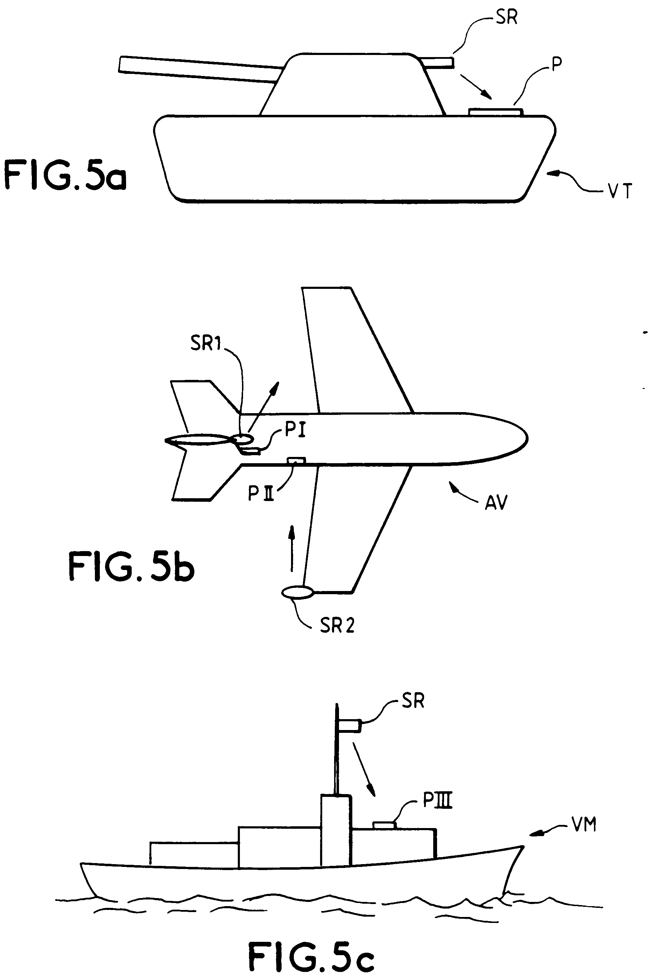

La figure 5b représente une implantation d'un radiomètre multispectral SR1 sur la dérive (associé à des plaques de référence) en position PI et en bout d'aile (SR2 associé à des plaques de référence PII) d'une plate-forme aérienne AV. En implantation sur une plate-forme maritime VM, le radiomètre multispectral SR peut être disposé comme montré sur la figure 5c sur la superstructure et associé à des plaques de référence situées en dessous (en position PIII).

L'invention n'est pas limitée aux exemples de réalisation décrits et représentés :
- un seul détecteur, le détecteur infrarouge, peut être mis en oeuvre dans le radiomètre multispectral ; dans ce cas, l'objectif peut être plus classiquement en germanium ;
- une seule plaque de référence peut être utilisée pour la calibration, la sensibilité du radiomètre multispectral étant étalonnée une fois pour toutes ou périodiquement,
- le dispositif est mis en oeuvre sans plaque de référence ; dans ce cas, le radiomètre multispectral et son électronique effectuent une simple comparaison du rayonnement de la cible et de celui de l'environnement ;
- les signaux des photodiodes de détection du rayonnement visible peuvent être mélangés pour fournir une indication colorimétrique complémentaire sur l'environnement de la plate-forme ;
- les détecteurs individuels sont remplacés par des barrettes de détecteurs qui permettent d'explorer la cible et le fond selon différentes lignes de visée et de réaliser une meilleure information de texture ; le système de balayage est alors de type caméra de surveillance ou de veille ;
- le radiomètre multispectral, porté par un véhicule accompagnateur, compare la signature du véhicule à protéger avec celle de l'environnement et transmet les informations au véhicule à protéger par radio ou par tout autre moyen connu ;
- les moyens d'asservissement déclenchés par le processeur lorsque le test de discrétion est positif peuvent consister en moyens d'adaptation en température de la circulation d'un fluide recouvrant les zones de la plate-forme à protéger.

## Revendications

**1** **-** Dispositif de contrôle et d'adaptation de signature d'une plate-forme (VT, AV, VM) dans un environnement variable, la plate-forme et son environnement émettant des rayonnements lumineux dans les bandes spectrales UV, visibles et IR, caractérisé en ce qu'il comporte un radiomètre multispectral (SR) à balayage, équipé d'une tête tournante (4) projetant les rayonnements provenant d'un espace balayé sur des moyens de détection (2) et de traitement (3), dans chacune desdites bandes, des niveaux de rayonnements émis respectivement par la plate-forme et par son environnement dans l'espace balayé, pour estimer des écarts de signatures de la plate-forme et de son environnement, et des moyens de commande (35 à 37) de diminution des écarts de signature estimés lorsque les moyens de traitement (3) émettent un signal d'alarme.

**2** **-** Dispositif de contrôle selon la revendication 1, caractérisé en ce que le tête tournante (4) porte un miroir de renvoi (6) d'un flux balayé lors de la rotation de la tête (4) entraînée par un moteur (5) sur 360° autour de l'axe optique (X'X) d'un objectif frontal (1).

**3** **-** Dispositif de contrôle selon la revendication 1, caractérisé en ce que des moyens de détection (2) comportent un détecteur pyroélectrique (21) pour détecter le rayonnement infrarouge, un ensemble de photodiodes (22) associées à des filtres colorés pour détecter le rayonnement visible, et un ensemble de photodiodes (23) à sensibilité augmentée dans l'UV.

**4** **-** Dispositif de contrôle selon la revendication 1, caractérisé en ce que la surface de la plate-forme porte une zone de référence comportant au moins une plaque homogène (P1, P2) thermostatée à une température préétablie et couplée à une sonde de température (Z1, Z2) pour calibrer la sensibilité du radiomètre multispectral dans le domaine infrarouge.

**5** **-** Dispositif de contrôle selon la revendication 1, caractérisé en ce que les moyens de détection spectrale (21, 22, 23) fournissent des signaux de détection (S) au circuit de traitement (3) qui comprend un amplificateur d'entrée (31) pour amplifier ces signaux, un dispositif de visualisation (32) pour fournir les courbes de variation des signaux de détection spectrale (S) en fonction de l'angle de rotation du miroir.

**6** **-** Dispositif de contrôle selon les revendications 4 et 5, caractérisé en ce que les sondes de température (Z1, Z2) fournissent des signaux (S') au circuit de traitement (3) pour calibrer en température le niveau du signal de détection infrarouge (S1).

**7** **-** Dispositif de contrôle selon la revendication 1, caractérisé en ce que les moyens de détection spectrale (21, 22. 23) fournissent des signaux de détection (S) au circuit de traitement (3) qui comprend un amplificateur d'entrée (31) pour amplifier ces signaux, couplé à un convertisseur Analogique-Numérique (35) pour convertir les intensités des signaux (S) amplifiés en valeurs numériques (Sn) lui-même couplé à un processeur (36) qui calcule des écarts de signature entre des valeurs moyennes des signaux (Sₙ) correspondant à des zones de balayage (II, III) de la surface de la plate-forme et de son environnement et qui compare ces écarts à des valeurs seuils prédéterminées pour constituer un test de discrétion.

**8** **-** Dispositif de contrôle selon les revendications 4 et 7, caractérisé en ce que les sondes de température (Z1, Z2) fournissent des signaux (S') au circuit de traitement (3) après conversion des intensités de ces signaux en valeurs numériques (S'n) pour calculer des écarts de signature entre des valeurs moyennes des signaux (S'n) correspondant à des zones (I, II, III) de balayage des plaques de référence (P1, P2) de la surface de la plate-forme et de son environnement.

**9** **-** Dispositif de contrôle selon la revendication 7, caractérisé en ce que, le test de discrétion étant positif, le processeur (36) déclenche une alarme (37) qui indique une modification adaptée de la signature estimée du fond pour que l'écart des signatures estimées diminue.

**10** **-** Dispositif de contrôle selon la revendication 7, caractérisé en ce que, le test de discrétion étant positif, le processeur (36) déclenche des moyens d'asservissement (38) du taux de transmission spectrale des couches électro-optiques recouvrant des couches réfléchissantes, les couches superposées étant réparties sur les points chauds de la plate-forme, et les moyens d'asservissement consistant à commander des potentiels d'électrodes de commande de transmission des couches électro-optiques pour que la variation de l'opacité de ces couches soit liée à la variation de l'écart de signatures estimé jusqu'à l'obtention d'un test de discrétion négatif.

**11** **-** Dispositif de contrôle selon la revendication 7, caractérisé en ce que, le test de discrétion étant positif, le processeur (36) déclenche des moyens d'adaptation en température d'un fluide circulant sur les zones de la plate-forme à protéger.

**12** **-** Dispositif de contrôle selon la revendication 1, caractérisé en ce que le circuit de traitement (3) comporte les moyens de traitement analogique (32) des signaux (S) selon la revendication 5 et les moyens de traitement numérique (35, 36) de ces signaux selon la revendication 7.
